# EUROPÄISCHE PATENTSCHRIFT

(11) **EP 2 018 292 B1**
(45) Veröffentlichungstag und Bekanntmachung des Hinweises auf die Patenterteilung: **18.11.2009**
(21) Anmeldenummer: 07724810.2
(22) Anmeldetag: 03.05.2007
(51) Int. Cl.: B60N 2/02, H02K 15/02

(54) **MOTORISCHER STELLANTRIEB FÜR EINEN FAHRZEUGSITZ**
MOTOR-DRIVEN ACTUATOR FOR A VEHICLE SEAT
MÉCANISME DE RÉGLAGE À MOTEUR POUR UN SIÈGE DE VÉHICULE AUTOMOBILE

(30) Priorität: 19.05.2006 DE 102006023536
(43) Veröffentlichungstag der Anmeldung: 28.01.2009
(73) Patentinhaber: KEIPER GmbH & Co. KG, 67657 Kaiserslautern (DE)
(72) Erfinder: SCHÜLER, Rolf, 42579 Heiligenhaus (DE)
(74) Vertreter: Patentanwälte Hosenthien-Held und Dr. Held
(86) Internationale Anmeldenummer: PCT/EP2007/003884
(87) Internationale Veröffentlichungsnummer: WO 2007/134704

(56) Entgegenhaltungen:
- DE-A1- 10 141 891
- DE-A1-102004 019 466

## Beschreibung

Die Erfindung betrifft einen motorischen Stellantrieb für einen Fahrzeugsitz, insbesondere einen Kraftfahrzeugsitz, mit den Merkmalen des Oberbegriffs des Anspruches 1.

Aus der DE 10 2004 019 466 A1 ist ein motorischer Stellantrieb dieser Art bekannt, bei welchem ein elektronisch kommutierter Motor und ein Differentialgetriebe als erste Getriebestufe räumlich und funktionell in ein lastaufnehmendes Getriebe als zweite Getriebestufe integriert sind.

Der Erfindung liegt die Aufgabe zu Grunde, einen motorischen Stellantrieb der eingangs genannten Art zu verbessern. Diese Aufgabe wird erfindungsgemäß durch einen motorischen Stellantrieb mit den Merkmalen des Anspruches 1 gelöst. Vorteilhafte Ausgestaltungen sind Gegenstand der Unteransprüche.

Der erfindungsgemäße motorische Stellantrieb bildet eine kleine, kompakte, untrennbare, vormontierbare Einheit mit einem Motor, welcher mit einem geringen Antriebsmoment einen geringen Strombedarf und einen kleinen Bauraumbedarf besitzt, und einer wenigstens zweistufigen hohen Getriebeuntersetzung, in welche das lastaufnehmende (= im Kraftfluss liegende, vorliegend im Kraftfluss zwischen den beiden relativ zueinander beweglichen Komponenten liegende) Getriebe integriert ist.

Mittels des integrierten Dichtelementes, das der zusammengebaute motorische Stellantrieb während der Herstellung zum Schutz des Motors und/oder seines elektrischen Kontaktes und/oder wenigstens einer der Getriebestufen aufweist, können die Komponenten des motorischen Stellantriebs im zusammengebauten Zustand einer teilweise aggressiven Oberflächenveredelung unterzogen werden, ohne dass die empfindlichen elektronischen und mechanischen Teile beschädigt werden. Indem das Dichtelement beim eingebauten motorischen Stellantrieb entfernt ist, können - unter Beibehaltung der Abdichtwirkung während der aggressiven Abschnitte der Oberflächenveredelung - Freiräume für einen Spielausgleich oder einen Ausgleich einer Taumelbewegung vorgesehen werden.

Die Freiräume reduzieren auch die Reibung und damit die Betriebskosten des motorischen Stellantriebs. Sowohl gegenüber Kappen oder dergleichen, die für die aggressiven Abschnitte der Oberflächenveredelung kurzzeitig montiert werden, als auch gegenüber einer Änderung des Prozessablaufs, gemäß welcher die empfindlichen Teile erst nach den aggressiven Abschnitten der Oberflächenveredelung eingebaut werden, werden der Montageaufwand und damit die Montagekosten klein gehalten.

Das Dichtelement wird beim Zusammenbau des motorischen Stellantriebs als gesondertes Bauteil eingebracht, beispielsweise in Form einer Dichtung, oder an einem anderen Bauteil ausgebildet, beispielsweise als dünne Materialschicht oder über eine Materialverengung angeformt. Vorzugsweise sind mehrere Dichtelemente vorgesehen. Ein Teil der vorhandenen Dichtelemente kann auf die eine Weise, der andere Teil auf die andere Weise vorgesehen werden. Die vorhandenen Dichtelemente sorgen dafür, dass der motorische Stellantrieb während der aggressiven Abschnitte der Oberflächenbehandlung, vorzugsweise einer Reinigung und/oder Lackierung, ein System mit geschlossenen Schnittstellen bildet, während die entfernten Dichtelemente den motorischen Stellantrieb zu einem System mit offenen - mechanischen und elektrischen - Schnittstellen macht, nämlich mit wenigstens einem Abtrieb und wenigstens einem elektrischen Kontakt.

Das Dichtelement kann thermisch entfernbar sein, beispielsweise durch Ausbildung aus einem thermoplastischen oder ähnlichen Material, welches während der agressiven Abschnitte der Oberflächenveredelung, vorzugsweise der Reinigung und/oder Lackierung, vorhanden ist, hingegen während der nicht-aggressiven Schlußabschnitte der Oberflächenveredelung, vorzugsweise einer Trocknung oder anderen thermischen Behandlung, automatisch sich entfernt oder schrumpft. Bevorzugt ist, dass das thermoplastische Material des Dichtelementes während der Trocknung oder anderen thermischen Behandlung schrumpft oder sich verflüssigt oder weich wird und sich durch Schwerkraft oder Kapillarwirkung oder dergleichen vom vormaligen Dichtraum entfernt, vorzugsweise in dafür vorgesehene Hohlräume des Gehäuses.

Das Dichtelement kann aber auch mechanisch entfernbar sein, beispielsweise durch Ausbildung als dünne Folie oder durch Vorsehen einer Sollbruchstelle oder eines Filmscharniers zu einem Bauteil des motorischen Stellantriebs, wobei das Dichtelement vor dem Einbau, durch den Einbau oder durch die Inbetriebnahme des motorischen Stellantriebs an seinem Bestimmungsort zerstört, herausgebrochen, geöffnet, ganz oder in Teilen abgeklappt oder anderweitig entfernt wird. Soweit das Dichtelement an einem Stecker eines elektrischen Kontaktes vorgesehen ist, kann es durch die sowieso notwendige Montage eines Gegensteckers entfernt werden. Soweit das Dichtelement an einem Mitnehmer oder sonstigen Antriebselement vorgesehen ist, kann es durch die sowieso notwendige Montage einer Übertragungsstange entfernt werden.

Es sind auch Kombinationen beider Varianten möglich, beispielsweise zeitlich, indem das Dichtelement zunächst durch eine thermische Behandlung möglichst weitgehend entfernt wird und dann durch die mechanische Behandlung die verbliebenen Reste entfernt werden oder umgekehrt, oder beispielsweise räumlich, indem im Falle mehrerer Dichtelemente einige thermisch und andere mechanisch entfernt werden.

Die erste Getriebestufe ist vorzugsweise als Kreisschubgetriebe (Flächendruckgetriebe) mit gehäusefesten Führungselementen für das Ritzel und einfacher Drehung des Getrieberades ausgebildet, wie es beispielsweise in der US 4,228,698 A offenbart ist, kann aber auch als Oldham-Kupplung (Kreuzkurbelgetriebe) ausgebildet sein, wie sie beispielsweise in der EP 0 450 324 B1 beschrieben ist. Aufgrund der Kreisschubbewegung brauchen die Zähne keine Evolventen zur Erzeugung einer Linienberührung aufweisen, sondern können flächig tragen und damit wesentlich höhere Lasten aushalten. Der Eingriff mehrerer Zähne und somit eine Reduzierung des Verdrehflankenspiels ist diesbezüglich ebenfalls vorteilhaft. Bei eventuellen Unwuchten in den Getriebestufen kann ein Massenausgleich vorgesehen werden, so dass ein harmonischer Lauf gewährleistet ist.

Die zweite Getriebestufe ist - bis auf die Scheibenform - entsprechend dem lastaufnehmenden Getriebe aufgebaut, wie es in der DE 10 2004 019 466 A1 beschrieben ist, d.h. zwei durch ein (vorzugsweise selbsthemmendes) Exzenterumlaufgetriebe (zum Feststellen und Verstellen) miteinander verbundene Beschlagteile führen relativ zueinander eine Drehbewegung mit überlagerter Taumelbewegung aus. Soweit die Beschlagteile keine Scheibenform aufweisen, ist allenfalls ein kleiner Teil der zweiten Getriebestufe in das Gehäuse integrierbar. Es ist bei allen Varianten der zweiten Getriebestufe denkbar, eine weitere Getriebestufe vorzusehen, beispielsweise zwischen der ersten und der zweiten Getriebestufe.

Eine Hohlwellenbauweise erlaubt einen einfachen Anschluss einer Übertragungsstange zwischen beiden Fahrzeugsitzseiten, vorzugsweise durch eine profilierte zentrale Aufnahme in dem Antriebsbauteil für das lastaufnehmende Getriebe, also vorliegend dem Mitnehmer der zweite Getriebestufe.

Im folgenden ist die Erfindung anhand eines in der Zeichnung dargestellten Ausführungsbeispiels näher erläutert. Es zeigen
- Fig. 1: einen Längsschnitt durch das Ausführungsbeispiel,
- Fig. 2: eine Teilansicht in Richtung des Pfeiles II in Fig. 1,

- Fig. 3: eine schematische Seitenansicht eines Fahrzeugsitzes,
- Fig. 4: eine perpektische Ansicht eines Steckers mit Dichtelement,
- Fig. 5A bis 5C: das Öffnen des Dichtelementes am Stecker durch Einführen eines Gegensteckers, und
- Fig. 6: einen Schnitt durch ein abgewandeltes Dichtelement.

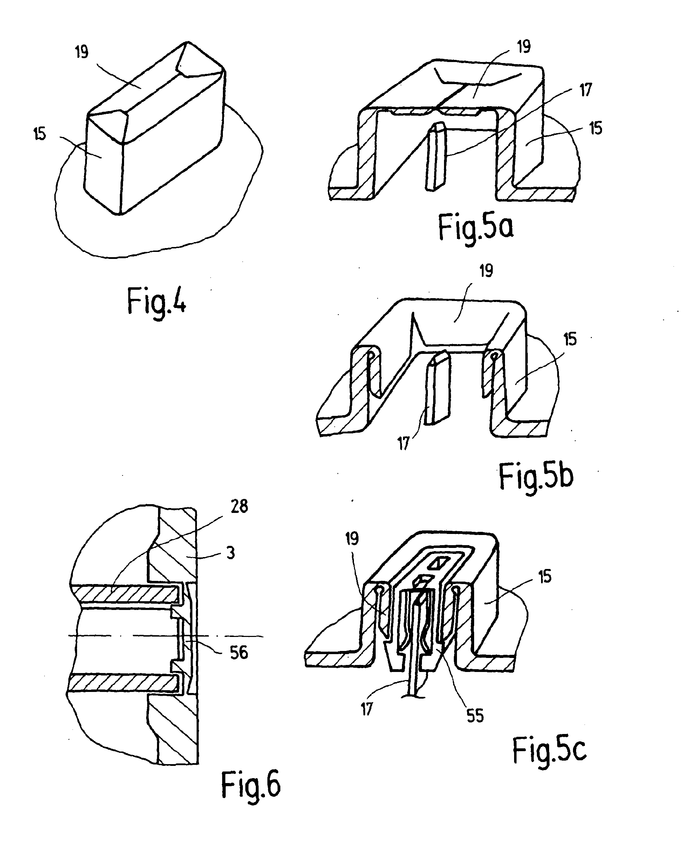

Ein motorischer Stellantrieb 1 für einen Fahrzeugsitz 2, beispielsweise eines Kraftfahrzeuges, weist ein Motorgehäuse 3 auf. Innerhalb des Motorgehäuses 3 ist ein drehbar gelagerter Rotor 6, dessen Drehachse als Hauptachse A bezeichnet ist und die nachfolgend verwendeten Richtungsangaben definiert, und ein fest im Motorgehäuse 3 gelagerter Stator 7 angeordnet. Der als Hohlwelle ausgebildete Rotor 6 weist auf seiner Außenseite in Umfangsrichtung mehrere Permanentmagnete auf. Radial außerhalb der Permanentmagnete ist der Stator 7 mit mehreren Statorpolen und Wicklungspaketen angeordnet. Der Rotor 6 und der Stator 7 bilden zusammen einen in den motorischen Stellantrieb 1 integrierten, elektronisch kommutierten Motor 11. Zur elektronischen Kommutierung des Stators 7 ist eine Platine 13 vorgesehen, welche axial versetzt zum Stator 7 im Motorgehäuse 3 angeordnet ist. Der Motor kann alternativ auch bürstenkommutiert sein. Am Motorgehäuse 3 ist wenigstens ein Stecker 15 angebracht oder angeformt, vorliegend axial vom Motorgehäuse 3 abstehend. Der Stecker 15 umschließt in seinem Inneren wenigstens einen elektrischen Kontakt 17, der mit der Platine 13 verbunden ist. Der Stecker 15 wird bei der Herstellung des Motorgehäuses 3 mit einem Deckel, im folgenden als erstes Dichtelement 19 bezeichnet, ausgebildet, wie in Fig. 4 dargestellt. Zwischen dem ersten Dichtelement 19 und dem Stecker 15 ist vorzugsweise eine Materialverengung in der Form einer Sollbruchstelle oder eines Filmscharniers vorgesehen, oder das erste Dichtelement 19 ist komplett als dünne Folie ausgebildet.

Der motorische Stellantrieb 1 weist eine integrierte erste Getriebestufe 21 nach dem Funktionsprinzip eines Kreisschubgetriebes (Flächendruckgetriebes) auf, die am Motor 11 abtriebsseitig angeordnet ist. Der den Abtrieb des Motors 11 bildende Rotor 6 ist axial über den Stator 7 hinaus verlängert und axial hintereinander mit zwei radial abstehenden Nocken oder dergleichen versehen, welche in Umfangsrichtung um 180° versetzt zueinander angeordnet sind. Auf jedem dieser jeweils einen Exzenter bildenden Nocken des Rotors 6 ist ein Getrieberad 24 gelagert. Die beiden axial hintereinander angeordneten Getrieberäder 24 kämmen mit einem gemeinsamen Hohlrad 25, wobei der Eingriff - durch die Lagerung der Getrieberäder 24 bedingt - an zwei gegenüberliegenden Stellen des Hohlrades 25 erfolgt. Das Hohlrad 25 ist fest mit dem Motorgehäuse 3 verbunden. Die Getrieberäder 24 führen somit bei Antrieb durch den Rotor 6 eine Drehbewegung mit überlagerter Taumelbewegung aus.

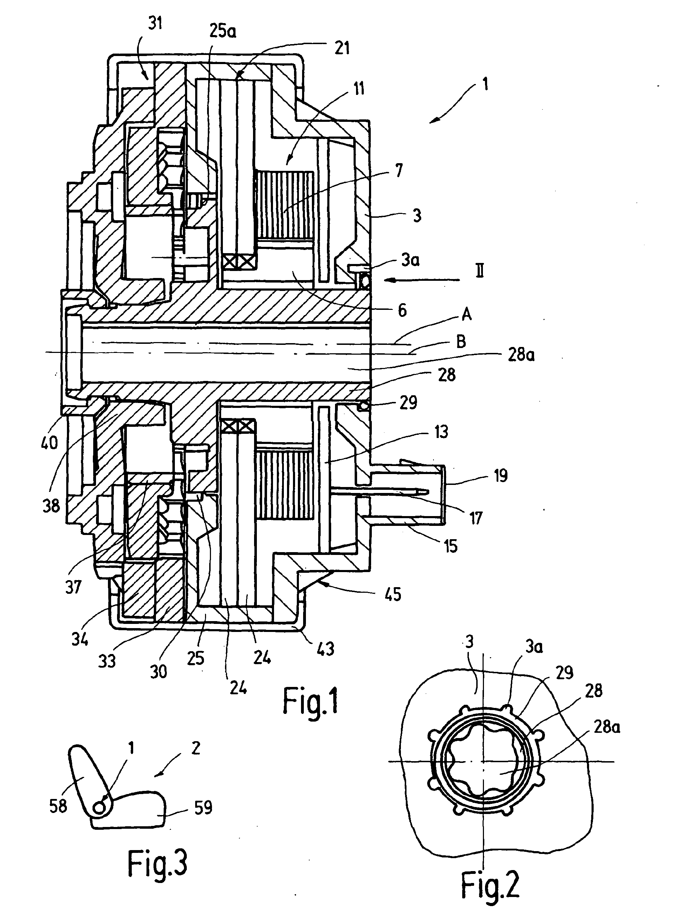

Als Abtrieb der ersten Getriebestufe 21 ist ein Mitnehmer 28 vorgesehen. Der Mitnehmer 28 ist in Hohlwellenbauweise ausgeführt und erstreckt sich vorzugsweise über die gesamte axiale Länge des motorischen Stellantriebs 1. Der Mitnehmer 28 ist über einen Teil seiner Länge hinweg innerhalb des Rotors 6 angeordnet und lagert denselben. An dem Ende des Mitnehmers 28, welches am Motorgehäuse 3 nach außen weist, wird beim Zusammenbau eine Dichtung, im folgenden als zweites Dichtelement 29 bezeichnet, zwischen Mitnehmer 28 und Motorgehäuse 3 eingebracht. Das Motorgehäuse 3 weist an dieser Stelle Hohlräume 3a auf, wie in Fig. 2 dargestellt.

An dem von der Platine 13 abgewandte Ende des Rotors 6 weist der Mitnehmer 28 einen radial nach außen abstehenden Flansch auf, welcher radial innerhalb eines radial nach innen abstehenden Flansches des Hohlrades 25 angeordnet ist. Zwischen den beiden Flanschen wird beim Zusammenbau eine weitere Dichtung, im folgenden als drittes Dichtelement 30 bezeichnet, zwischen Mitnehmer 28 und Hohlrad 25 eingebracht. Das Hohlrad 25 weist an dieser Stelle Hohlräume 25a auf. Vom Flansch des Mitnehmers 28 stehen axial mehrere Führungselemente ab, beispielsweise Bolzen, welche jeweils mit Spiel in eine entsprechende Anzahl von Öffnungen jedes Getrieberads 24 greifen. Durch die um 180° in Umfangsrichtung versetzte Anordnung der Getrieberäder 24 ergibt sich eine eindeutige und querkraftfreie Anordnung der Führungselemente, welche die Taumelbewegung der Getrieberäder 24 ausgleicht und zu einer reinen Drehbewegung des Mitnehmers 28 um die Hauptachse A führt.

Der Mitnehmer 28 ist zugleich Bestandteil einer zweiten Getriebestufe 31. Die zweite Getriebestufe 31 weist ein erstes Beschlagteil 33 mit einem zur Hauptachse A konzentrischen Zahnrad und ein zweites Beschlagteil 34 mit einem Zahnkranz auf, welche unter Bildung eines Exzenterumlaufgetriebe miteinander in Getriebeverbindung stehen und durch einen Exzenter zu einer relativen Abwälzbewegung aneinander, bestehend aus einer Drehbewegung und einer überlagerten Taumelbewegung, angetrieben werden. Der Exzenter wird durch den Mitnehmer 28 und ein Keilsystem zum Sperren und Spielfreistellen gebildet. Ein derartiges Exzenterumlaufgetriebe ist vom Prinzip her in der DE 44 36 101 A1 beschrieben, deren Offenbarungsgehalt ausdrücklich einbezogen wird. Die vorliegend verwendete Scheibenform der zweiten Getriebestufe 31 ist in der DE 101 05 282 A1 beschrieben, deren Offenbarungsgehalt ebenfalls ausdrücklich einbezogen wird.

Einerseits ist der unter Beteiligung des Mitnehmers 28 gebildete Exzenter in einer in das erste Beschlagteil 33 eingepressten Gleitlagerbuchse 37 gelagert. Andererseits ist der Mitnehmer 28 in einem Kragenzug 38 des zweiten Beschlagteils 34 gelagert und mittels eines aufgeclipsten Sicherungsrings 40 am zweiten Beschlagteil 34 axial gesichert und relativ zu diesem drehbar. Das zweite Beschlagteil 34 und mit ihm der Kragenzug 38 sind konzentrisch zu einer Nebenachse B, welche parallel versetzt zur Hauptachse A angeordnet ist und die Taumelbewegung definiert. Das erste Beschlagteil 33 ist fest mit dem Hohlrad 25 und damit mit dem Motorgehäuse 3 verbunden. Ein Umklammerungsring 43 ist fest mit dem Motorgehäuse 3, dem Hohlrad 25 und dem ersten Beschlagteil 33 verbunden, wodurch ein gemeinsames Gehäuse 45 gebildet wird, und übergreift das zweite Beschlagteil 34 an seinem radial äußeren Rand, gegebenenfalls unter Zwischenlage von Gleitelementen zur Verringerung der Reibung.

Wenn der motorische Stellantrieb 1 in der beschriebenen Weise durch Zusammenbau des Motors 11 und der beiden Getriebestufen 21 und 31 und Integration in das gemeinsame Gehäuse 45 entstanden ist, wird er zunächst komplett eine Reinigung, genauer gesagt einer Entfettung, unterzogen, entweder in einem Tauchbad oder mit einem Sprühprozess. Dann wird der motorische Stellantrieb 1 komplett einer Lackierung unterzogen, ebenfalls entweder in einem Tauchbad oder mit einem Sprühprozess. Sowohl bei der Reinigung als auch bei der Lackierung schützen die drei Dichtelemente 19, 29 und 30 den elektrischen Kontakt 17 bzw. das Innere des Motorgehäuses 3 und des Hohlrades 25 - und damit die Bestandteile von Motor 11 und erster Getriebestufe 21 - vor einem Kontakt mit dem Reinigungsmittel und dem Lack und damit vor einer Verschlechterung der Produkteigenschaften. Die Dichtelemente 19, 29 und 30 dichten somit den Motor 11, seinen elektrischen Kontakt 17 und die erste Getriebestufe 21 ab.

Nach der Lackierung wird der motorische Stellantrieb 1 einer Trocknung in einem Trockenofen unterzogen, also thermisch behandelt. Die Bestandteile des Motors 11 und der ersten Getriebestufe 21 halten die verwendete Temperatur von etwa 140° bis 160° C aufgrund ihrer Auslegung auf ähnlich hohe Betriebstemperaturspitzen problemlos aus. Die beiden Dichtelemente 29 und 30 bestehen erfindungsgemäß aus einem thermoplastischen Material, dessen Schmelzpunkt mit der Temperatur des Trockenofens übereinstimmt oder darunter liegt. Dadurch verflüssigen sich die Dichtelemente 29 und 30 im Trockenofen. Das Material der Dichtelemente 29 und 30 kann von dem vormaligen Dichtraum in die freigehaltenen Hohlräume 3a und 25a fließen, bei geringem Volumen der Hohlräume 3a und 25a beispielsweise automatisch aufgrund der Kapillarwirkung. Um die Hohlräume 3a und 25a beim Einbringen der Dichtelemente 29 und 30 freizuhalten, können beispielsweise Platzhalter vorgesehen werden, die danach wieder entfernt werden oder mit der Verflüssigung der Dichtelemente 29 und 30 herausfallen. Der vormalige Dichtraum steht nun als Freiraum dem Mitnehmer 28 für einen Spielausgleich oder den Ausgleich einer Taumelbewegung zur Verfügung. In einer Abwandlung kann das Material der Dichtelemente 29 und 30 während der Trocknung oder anderen thermischen Behandlung schrumpfen und den vormaligen Dichtraum wenigstens teilweise freigeben. In allen Fällen werden die vorher vorhandenen Anpresskräfte zwischen den zu dichtenden Teilen aufgehoben.

Der motorische Stellantrieb 1 kann nun an seinem Bestimmungsort eingebaut und betriebsfertig werden. Zum elektrischen Anschluss wird mit einem Werkzeug oder vorzugsweise mit dem in oder auf den Stecker 15 zu steckenden Gegenstecker 55 das erste Dichtelement 19 zerstört, herausgebrochen oder ganz oder in Teilen abgeklappt oder anderweitig entfernt und der Gegenstecker 55 eingeführt oder aufgeschoben. Die Schritte sind schematisch in Fig. 5A bis 5C dargestellt. Abgeklappte Teile des ersten Dichtelementes 19 wirken vorzugsweise als Verrastung für den Gegenstecker 55. Das erste Dichtelement 19 kann auch thermisch entfernt werden, d.h. wie die Dichtelemente 29 und 30. Die thermische Behandlung zum Entfernen des ersten Dichtelementes 19 kann alternativ zum mechanischen Entfernen oder als Vorarbeit dazu vorgesehen sein. In der letzten Variante würde das Werkzeug oder der Gegenstecker 55 nur noch die Reste des ersten Dichtelementes 19 beseitigen.

Der Mitnehmer 28 weist eine zur Nebenachse B konzentrische, profilierte Aufnahme 28a auf. Diese Aufnahme 28a kann drehfest eine Übertragungsstange aufnehmen, um eine einzelne zweite Getriebestufe 31 auf der anderen Fahrzeugsitzseite synchron anzutreiben. Eine Synchronisation der beiden Fahrzeugsitzseiten kann auch durch die elektronische Kommutierung erfolgen. In abgewandelter Ausführung gemäß Fig. 6 kann auch der Mitnehmer 28 an seiner Stirnseite, insbesondere der offenen Aufnahme 28a, mit einem vierten Dichtelement 56 in der Art des ersten Dichtelements 19 abgedeckt sein, welcher mittels einer Materialverengung, beispielsweise in der Form einer Sollbruchstelle oder eines Filmscharniers, mit dem Motorgehäuse 3 oder einem anderen Bauteil, insbesondere des Gehäuses 45, verbunden ist und das zuvor beschriebene zweite Dichtelement 29 ersetzt. Durch Drehung des Mitnehmers 28 oder Einführen der Übertragungsstange wird dieses vierte Dichtelement 56 abgebrochen und dadurch entfernt. Es ist auch möglich, dass eine thermische Behandlung das vierte Dichtelement 56 entfernt oder Vorarbeit hierfür leistet.

Die zweite Getriebestufe 31 dient als lastaufnehmendes Getriebe, welches im Kraftfluss zwischen den zwei vom motorischen Stellantrieb 1 relativ zueinander zu bewegenden Bauteilen des Fahrzeugsitzes 2 liegt und insbesondere im Crashfall die Kräfte aufnimmt und weiterleitet. Der erfindungsgemäße motorische Stellantrieb 1 kann beispielsweise zur Neigungseinstellung einer Lehne 58 des Fahrzeugsitzes 2 relativ zu einem Sitzteil 59 des Fahrzeugsitzes 2 eingesetzt werden, so dass die zweite Getriebestufe 41 im Kraftfluss zwischen der Lehne 58 und dem Sitzteil 59 liegt. Beispielsweise ist das gemeinsame Gehäuse 45 mit der Struktur des Sitzteils 59 verbunden, während das zweite Beschlagteil 34 als Abtrieb mit der Struktur der Lehne 58 verbunden ist.

Der motorische Stellantrieb 1 kann aber auch zur Höheneinstellung des Sitzteils 59 eingesetzt werden, indem der motorische Stellantrieb 1 beispielsweise zwischen einer Schwinge einerseits und einem Sitzrahmen oder einer Sitzschiene andererseits wirksam ist. Es sind weitere Einsatzmöglichkeiten des motorischen Stellantriebs zwischen weiteren, relativ zueinander beweglichen Komponenten des Fahrzeugsitzes 2 möglich.

### Bezugszeichenliste

- 1: motorischer Stellantrieb
- 2: Fahrzeugsitz
- 3: Motorgehäuse
- 3a: Hohlraum des Motorgehäuses
- 6: Rotor
- 7: Stator
- 11: Motor
- 13: Platine
- 15: Stecker
- 17: elektrischer Kontakt
- 19: erstes Dichtelement
- 21: erste Getriebestufe
- 24: Getrieberad
- 25: Hohlrad
- 25a: Hohlraum des Hohlrades
- 28: Mitnehmer
- 28a: Aufnahme
- 29: zweites Dichtelement
- 30: drittes Dichtelement
- 31: zweite Getriebestufe
- 33: erstes Beschlagteil
- 34: zweites Beschlagteil
- 37: Gleitlagerbuchse
- 38: Kragenzug
- 40: Sicherungsring
- 43: Umklammerungsring
- 45: Gehäuse
- 55: Gegenstecker
- 56: viertes Dichtelement
- 58: Lehne
- 59: Sitzteil
- A: Hauptachse
- B: Nebenachse

## Patentansprüche

1. Motorischer Stellantrieb (1) für ein Fahrzeug, insbesondere für einen Fahrzeugsitz (2), zwischen zwei relativ zueinander beweglichen Komponenten (58, 59) des Fahrzeuges oder Fahrzeugsitzes (2), mit einem insbesondere elektronisch kommutierten Motor (11), wenigstens einer abtriebsseitig am Motor (11) angeordneten ersten Getriebestufe (21) und einer abtriebsseitig an der ersten Getriebestufe (21) angeordneten, als lastaufnehmendes Getriebe dienenden zweiten Getriebestufe (31), welche in den motorischen Stellantrieb (1) integriert sind, insbesondere in ein gemeinsames Gehäuse (45) des motorischen Stellantriebs (1) integriert sind, **dadurch gekennzeichnet, dass** der zusammengebaute motorische Stellantrieb (1) während der Herstellung integrierte Dichtelemente (19, 29, 30, 56) zum Schutz des Motors (11) und/oder seines elektrischen Kontaktes (17) und/oder wenigstens einer der Getriebestufen (21, 31) aufweist, die beim eingebauten, betriebsfertigen motorischen Stellantrieb (1) entfernt sind.

2. Motorischer Stellantrieb nach Anspruch 1, **dadurch gekennzeichnet, dass** das Dichtelement (19, 29, 30, 56) aus einem insbesondere thermoplastischen Material besteht, welches während einer wenigstens abschnittsweise aggressiven Oberflächenbehandlung, insbesondere einer Reinigung und/oder Lackierung, wirksam ist.

3. Motorischer Stellantrieb nach Anspruch 2, **dadurch gekennzeichnet, dass** das thermoplastische Material des Dichtelementes (19, 29, 30, 56) während einer Trocknung oder anderen thermischen Behandlung nach dem aggressiven Abschnitt der Oberflächenbehandlung automatisch sich entfernt oder schrumpft und **dadurch** den vormaligen Dichtraum ganz oder teilweise freigibt.

4. Motorischer Stellantrieb nach Anspruch 3, **dadurch gekennzeichnet, dass** das thermoplastische Material des Dichtelementes (19, 29, 30, 56) während der Trocknung oder anderen thermischen Behandlung sich verflüssigt oder weich wird und sich durch Kapillarwirkung vom vormaligen Dichtraum entfernt.

5. Motorischer Stellantrieb nach einem der Ansprüche 1 bis 4, **dadurch gekennzeichnet, dass** das Dichtelement (19, 29, 30, 56) komplett als dünne Folie oder über eine Sollbruchstelle, ein Filmscharnier oder eine andere Materialverengung mit einem Bauteil (3, 15, 25) des motorischen Stellantriebs (1) verbunden ausgebildet ist.

6. Motorischer Stellantrieb nach einem der Ansprüche 1 bis 5, **dadurch gekennzeichnet, dass** das Dichtelement (19, 29, 30, 56) vor dem Einbau, durch den Einbau oder durch die Inbetriebnahme des motorischen Stellantriebs (1) zerstört, herausgebrochen, geöffnet, ganz oder in Teilen abgeklappt oder anderweitig entfernt wird.

7. Motorischer Stellantrieb nach Anspruch 6, **dadurch gekennzeichnet, dass** das Dichtelement (19, 29, 30, 56) an einem Stecker (15) des motorischen Stellantriebs (1) vorgesehen ist und durch die Montage eines Gegensteckers (55) entfernt wird.

8. Fahrzeugsitz (2) mit einem Sitzteil (59), einer Lehne (58) und wenigstens einem motorischen Stellantrieb (1) nach einem der Ansprüche 1 bis 7 zwischen dem Sitzteil (59) und der Lehne (58).

9. Verfahren zur Herstellung eines motorischen Stellantriebs (1) nach einem der Ansprüche 1 bis 7, gemäß dem ein mittels wenigstens eines elektrischen Kontaktes (17) anschließbarer Motor (11), wenigstens eine abtriebsseitig am Motor (11) angeordnete erste Getriebestufe (21) und eine abtriebsseitig an der ersten Getriebestufe (21) angeordnete, als lastaufnehmendes Getriebe dienende zweite Getriebestufe (31) zum motorischen Stellantrieb (1) zusammengebaut werden und der zusammengebaute motorische Stellantrieb (1) einer abschnittsweise aggressiven Oberflächenbehandelung, insbesondere einer Reinigung und/oder Lackierung, unterzogen wird, **dadurch gekennzeichnet, dass** der Motor (11) und/oder sein elektrischer Kontakt (17) und/oder die erste Getriebestufe (21) durch Einbringen oder Ausbilden wenigstens eines Dichtelementes (19, 29, 30, 56) vor der Oberflächenbehandlung abgedichtet wird.

10. Verfahren nach Anspruch 9, **dadurch gekennzeichnet, dass** der motorische Stellantrieb (1) nach dem aggressiven Abschnitt der Oberflächenbehandlung, insbesondere der Reinigung und Lackierung, einer Trocknung oder anderen thermischen Behandlung unterzogen wird.

11. Verfahren nach Anspruch 10, **dadurch gekennzeichnet, dass** das Material des Dichtelementes (19, 29, 30, 56) bei der Trocknung oder anderen thermischen Behandlung sich verflüssigt oder weich wird oder schrumpft.

12. Verfahren nach Anspruch 11, **dadurch gekennzeichnet, dass** das verflüssigte oder weich gewordene Material des Dichtelementes (19, 29, 30, 56) in Hohlräume (3a, 25a) des Gehäuses (45) des motorischen Stellantriebs (1) fließt, insbesondere automatisch.

13. Verfahren nach einem der Ansprüche 9 bis 12, **dadurch gekennzeichnet, dass** nach der Oberflächenbehandlung des motorischen Stellantriebs (1) das Dichtelement (19, 29, 30, 56) zerstört und/oder ganz oder in Teilen entfernt wird, insbesondere mittels einer einzuführenden Übertragungsstange oder mittels eines ein- oder aufzusteckenden Gegensteckers (55).

## Claims

1. A motor-driven actuator (1) for a vehicle, in particular for a vehicle seat (2), between two components (58, 59) of the vehicle or vehicle seat (2) that are movable relative to each other, comprising an, in particular electronically commutated, motor (11), at least one first gear stage (21) which is arranged on the output side of the motor (11) and a second gear stage (31) which is arranged on the output side of the first gear stage (21) and acts as a load-bearing gear, which motor and gear stages are integrated into the motor-driven actuator (1), in particular are integrated into a common housing (45) of the motor-driven actuator (1), **characterized in that** the assembled motor-driven actuator (1) has sealing elements (19, 29, 30, 56) which are integrated during manufacture to protect the motor (11) and/or its electrical contact (17) and/or at least one of the gear stages (21, 31) which are removed from the installed, ready-to-operate motor-driven actuator (1).

2. The motor-driven actuator as claimed in Claim 1, **characterized in that** the sealing element (19, 29, 30, 56) consists of an, in particular, thermoplastic material which is active during a surface treatment which is aggressive at least in certain sections, in particular cleaning and/or painting.

3. The motor-driven actuator as claimed in Claim 2, **characterized in that** the thermoplastic material of the sealing element (19, 29, 30, 56) is automatically removed or shrinks during drying or another heat treatment after the aggressive section of the surface treatment and thus wholly or partially releases the previous sealing space.

4. The motor-driven actuator as claimed in Claim 3, **characterized in that** the thermoplastic material of the sealing element (19, 29, 30, 56) liquefies or softens during the drying or other heat treatment and is removed from the previous sealing space by capillary action.

5. The motor-driven actuator as claimed in any one of Claims 1 to 4, **characterized in that** the sealing element (19, 29, 30, 56) is configured in its entirety as a thin sheet or is connected to a component (3, 15, 25) of the motor-driven actuator (1) via a predetermined breaking point, a film hinge or another material constriction.

6. The motor-driven actuator as claimed in any one of Claims 1 to 5, **characterized in that** the sealing element (19, 29, 30, 56) is destroyed, broken out, opened, wholly or partially folded down or otherwise removed prior to the installation, by the installation or by the putting into operation of the motor-driven actuator (1).

7. The motor-driven actuator as claimed in Claim 6, **characterized in that** the sealing element (19, 29, 30, 56) is provided on a connector (15) of the motor-driven actuator (1) and is removed by the fitting of a mating connector (55).

8. A vehicle seat (2) comprising a seat part (59), a backrest (58) and at least one motor-driven actuator (1) as claimed in any one of Claims 1 to 7 between the seat part (59) and the backrest (58).

9. A method for manufacturing a motor-driven actuator (1) as claimed in any one of Claims 1 to 7, according to which a motor (11) which can be connected by means of at least one electrical contact (17), at least one first gear stage (21) which is arranged on the output side of the motor (11) and a second gear stage (31) which is arranged on the output side of the first gear stage (21) and acts as a load-bearing gear are combined to form the motor-driven actuator (1) and the assembled motor-driven actuator (1) is subjected to a surface treatment which is aggressive in certain sections, in particular cleaning and/or painting, **characterized in that** the motor (11) and/or its electrical contact (17) and/or the first gear stage (21) are sealed by introducing or forming at least one sealing element (19, 29, 30, 56) prior to the surface treatment.

10. The method as claimed in Claim 9, **characterized in that** the motor-driven actuator (1) is subjected to drying or another heat treatment after the aggressive section of the surface treatment, in particular the cleaning and painting.

11. The method as claimed in Claim 10, **characterized in that** the material of the sealing element (19, 29, 30, 56) liquefies or softens or shrinks during the drying or other heat treatment.

12. The method as claimed in Claim 11, **characterized in that** the liquefied or softened material of the sealing element (19, 29, 30, 56) flows, in particular automatically, into cavities (3a, 25a) in the housing (45) of the motor-driven actuator (1).

13. The method as claimed in any one of Claims 9 to 12, **characterized in that** after the surface treatment of the motor-driven actuator (1) the sealing element (19, 29, 30, 56) is destroyed and/or wholly or partially removed, in particular by means of a transmission rod to be inserted or by means of a mating connector (55) to be plugged in or on.

## Revendications

1. - Mécanisme de réglage motorisé (1) pour un véhicule, en particulier pour un siège de véhicule (2), entre deux éléments (58, 59) du véhicule ou du siège de véhicule (2) pouvant se déplacer l'un par rapport à l'autre, avec un moteur (11), en particulier à commutation électrique, avec au moins un premier étage de transmission (21) monté sur le côté de sortie du moteur (11) et un deuxième étage de transmission (31), servant de transmission supportant la charge et monté sur le côté de sortie du premier étage de transmission (21), qui sont intégrés dans le mécanisme de réglage motorisé (1), en particulier intégrés dans un carter commun (45) du mécanisme de réglage motorisé (1), **caractérisé par le fait que** le mécanisme de réglage motorisé (1) assemblé possède des éléments d'étanchéité (19, 29, 30, 56) qui sont intégrés pendant la fabrication pour la protection du moteur (11) et/ou de son contact électrique (17) et/ou d'au moins l'un des étages de transmission (21, 31) et qui sont éliminés sur le mécanisme de réglage motorisé (1) installé et prêt à fonctionner.

2. - Mécanisme de réglage motorisé selon la revendication 1, **caractérisé par le fait que** l'élément d'étanchéité (19, 29, 30, 56) est fabriqué dans un matériau, en particulier thermoplastique, qui entre en action pendant un traitement de surface au moins agressif par phases, en particulier pendant un nettoyage et/ou un laquage.

3. - Mécanisme de réglage motorisé selon la revendication 2, **caractérisé par le fait que** le matériau thermoplastique de l'élément d'étanchéité (19, 29, 30, 56) s'élimine ou se contracte automatiquement pendant un séchage ou un autre traitement thermique suivant la phase agressive du traitement de surface et libère ainsi totalement ou partiellement l'ancien espace d'étanchéification.

4. - Mécanisme de réglage motorisé selon la revendication 3, **caractérisé par le fait que** le matériau thermoplastique de l'élément d'étanchéité (19, 29, 30, 56) se liquéfie ou se ramollit pendant le séchage ou autre traitement thermique et s'élimine de l'ancien espace d'étanchéification par un effet capillaire.

5. - Mécanisme de réglage motorisé selon l'une des revendications 1 à 4, **caractérisé par le fait que** l'élément d'étanchéité (119, 29, 30, 56) est formé intégralement d'un film mince ou est relié par un point de rupture forcé, un film-charnière ou une autre striction du matériau avec un composant (3, 15, 25) du mécanisme de réglage motorisé (1).

6. - Mécanisme de réglage motorisé selon l'une des revendications 1 à 5, **caractérisé par le fait que** l'élément d'étanchéité (19, 29, 30, 56), avant le montage, du fait du montage ou à cause de la mise en service du mécanisme de réglage motorisé (1), est détruit, brisé, ouvert, replié intégralement ou en morceaux ou autrement éliminé.

7. - Mécanisme de réglage motorisé selon la revendication 6, **caractérisé par le fait que** l'élément d'étanchéité (19, 29, 30, 56) est prévu sur un connecteur (15) du mécanisme de réglage motorisé (1) et est éliminé par le montage d'un connecteur conjugué (55).

8. - Siège de véhicule (2) avec une assise (59), un dossier (58) et au moins un mécanisme de réglage motorisé (1) selon l'une des revendications 1 à 7 placé entre l'assise (59) et le dossier (58).

9. - Procédé de fabrication d'un mécanisme de réglage motorisé (1) selon l'une des revendications 1 à 7, dans lequel un moteur (11) pouvant être raccordé par au moins un contact électrique (17), au moins un premier étage de transmission (21) monté sur le côté de sortie du moteur (11) et un deuxième étage de transmission (31), servant de transmission supportant la charge et monté sur le côté de sortie du premier étage de transmission (21), sont assemblés en un mécanisme de réglage motorisé (1) et dans lequel le mécanisme de réglage motorisé (1) assemblé est soumis à un traitement de surface agressif au moins par phases, en particulier un nettoyage et/ou un laquage, **caractérisé par le fait que** le moteur (11) et/ou son contact électrique (17) et/ou le premier étage de transmission (21) est étanchéifié par application ou formation d'au moins un élément d'étanchéité (19, 29, 30, 56) avant le traitement de surface.

10. - Procédé selon la revendication 9, **caractérisé par le fait que** le mécanisme de réglage motorisé (1), après la phase agressive du traitement de surface, en particulier le nettoyage et le laquage, est soumis à un séchage ou autre traitement thermique.

11. - Procédé selon la revendication 10, **caractérisé par le fait que** le matériau de l'élément d'étanchéité (19, 29, 30, 56), pendant le séchage ou autre traitement thermique, se liquéfie, se ramollit ou se contracte.

12. - Procédé selon la revendication 11, **caractérisé par le fait que** le matériau liquéfié ou ramolli de l'élément d'étanchéité (19, 29, 30, 56) s'écoule, en particulier automatiquement, dans des espaces creux (3a, 25a), du carter (45) du mécanisme de réglage motorisé (1).

13. - Procédé selon l'une des revendications 9 à 12, **caractérisé par le fait que**, après le traitement de surface du mécanisme de réglage motorisé (1), l'élément d'étanchéité (19, 29, 30, 56) est détruit ou éliminé intégralement ou par parties, en particulier à l'aide d'une tige de transmission devant être introduite ou à l'aide d'un connecteur conjugué (55) qui doit être placé dessus ou dedans.
